(19) Europäisches Patentamt
European Patent Office
Office européen des brevets

(11) Veröffentlichungsnummer: **0 391 030 A2**

# (12) EUROPÄISCHE PATENTANMELDUNG

(21) Anmeldenummer: **90101739.2**

(51) Int. Cl.5: **C08G 65/44, C08G 65/40**

(22) Anmeldetag: **29.01.90**

(30) Priorität: **04.04.89 DE 3910825**

(43) Veröffentlichungstag der Anmeldung:
**10.10.90 Patentblatt 90/41**

(84) Benannte Vertragsstaaten:
**AT BE DE FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Kowalczik, Udo, Dr.**
**Camillo-Sitte-Weg 4**
**D-4630 Bochum 1(DE)**
Erfinder: **Bartmann, Martin, Dr.**
**Burgstrasse 35**
**D-4350 Recklinghausen(DE)**
Erfinder: **Neugebauer, Wolfgang, Dr.**
**Karl-Leisner-Strasse 3**
**D-4408 Dülmen(DE)**

## (54) Polyphenylenether-Polykondensat-Blockcopolymere und Verfahren zu ihrer Herstellung.

(57)

2.1 Aufgabe der Erfindung war die Entwicklung einer einfachen Synthese neuer Polyphenylenether-Polykondensat-Blockcopolymerer, die weitestgehend frei von Homopolymeren anfallen sollten.

2.2 Die Aufgabe wurde durch ein Verfahren gelöst, das aus folgenden Schritten besteht:
- man stellt zunächst ein neuartiges Polykondensat her, das phenolische Endgruppen mit einer Fähigkeit zur oxidativen Kupplung besitzt;
- dieses Polykondensat wird als Comonomeres bei der oxidativen Kupplung substituierter Phenole eingesetzt.

2.3 Die erfindungsgemäßen Blockcopolymere können für sich alleine oder als Zusatz für thermoplastische Formmassen verwendet werden.



Xerox Copy Centre

## Polyphenylenether-Polykondensat-Blockcopolymere und Verfahren zu ihrer Herstellung

Die vorliegende Erfindung beschreibt neuartige Polyphenylenether-Polykondensat-Blockcopolymere sowie ihre Herstellung aus substituierten Phenolen und bestimmten Polykondensaten.

Polyphenylenether-Polykondensat-Blockcopolymere sind im Prinzip bekannt. Die DE-OS 15 20 019 beschreibt die Herstellung von Blockcopolymeren aus Polyphenylenethern, die an beiden Enden phenolische OH-Gruppen tragen, und Polykondensaten wie z. B. Polyestern oder Polyamiden. So wird z. B. ein Polyphenylenether-Polyester-Blockcopolymeres durch Veresterung eines difunktionellen Polyphenylenethers und 1,6-Hexandiol mit Adipinsäuredichlorid in trockenem Pyridin hergestellt. Nachteile dieser Methode sind die geringe Reaktionsfähigkeit der phenolischen Endgruppen, der Einsatz von Säurechloriden und die Verwendung von Pyridin.

In der EP-OS 0 248 263 werden Formmassen sowie Verfahren zu ihrer Herstellung beschrieben, die Polyphenylenether-Polyester-Block- oder Pfropfcopolymere der allgemeinen Formel A-$Z^1$-B enthalten. A ist hierbei ein Polyphenylenether- und B ein Polyesterblock; $Z^1$ ist eine Verknüpfungsgruppe, die sich von einer Vielzahl di- oder polyfunktioneller Verbindungen wie z. B. Trimellitsäureanhydridchlorid, Terephthalsäuredichlorid, Maleinsäurederivaten, Hexamethylendiisocyanat, 1,4-Bis(2-oxazolinyl)benzol oder Glycidylmethacrylat ableitet. Man geht hierbei von einem vorgebildeten, zunächst unfunktionalisierten Polyphenylenether aus und führt die Verknüpfung durch Reaktion an der phenolischen Endgruppe (z. B. Veresterung mit Säurechloriden), an den aromatischen Ringen (elektrophile Substitution mit N-Methylolacetamid und Methansulfonsäure, Beispiel 2) oder an den Alkylgruppen (radikalischer Angriff mit Glycidylmethacrylat, Beispiele 5 - 9) durch. Nachteilig sind:

- die geringe Reaktivität der sterisch gehinderten phenolischen Endgruppe; die Pfropfungsausbeute bezogen auf den Polyphenylenether beträgt durchschnittlich nur ca. 30 %;
- der unspezifische Charakter der Reaktion beim Angriff auf die aromatischen Ringe oder die Alkylgruppen; die Zahl der eingeführten Verknüpfungsgruppen $Z^1$ sowie der Ort der Substitution können nicht im voraus festgelegt werden.
- Bildung eines großen Anteils von Homopolymerisat beim radikalischen Angriff polymerisierbarer funktioneller Verbindungen wie z. B. Glycidylmethacrylat; diese Homopolymeren müssen anschließend in aufwendiger Weise abgetrennt werden.

Ein Spezialfall von Polyphenylenether-Polykondensat-Blockcopolymeren ist in der EP-OS 0 193 741 beschrieben; das Polykondensat, vorzugsweise ein Polyester, besitzt flüssigkristallinen Charakter. Ausgehend von vorgebildeten Polyphenylenethern erfolgt auch hier die Verknüpfung an den phenolischen Endgruppen, z. B. durch Reaktion mit Säurechloriden.

Polyphenylenether-Polyamid-Blockcopolymere werden durch Umsetzung der phenolischen Endgruppen von vorgebildeten, unfunktionalisierten Polyphenylenethern mit di- oder polyfunktionellen Kupplungsreagenzien, die als Promotoren für die anschließende Polymerisation von zugesetztem Lactam wirken, hergestellt (EP-OS 0 211 201; Polym. Bull. 17 (1987), 423). Nachteilig ist auch hier die geringe Reaktivität der phenolischen Endgruppe, die den Einsatz eines hohen Promotorüberschusses oder technisch ungebräuchlicher Reagenzien wie Natriumhydrid erfordert; die Produkte enthalten nur 10 bis 46 Gew.-% Blockcopolymeres. Außerdem ist diese Methode auf Blockcopolymere beschränkt, deren Polyamidsegment sich von Lactamen herleitet.

Polyphenylenether-Polyester-Propfcopolymere, bei denen eine Polyphenylenether-Hauptkette mit Polypivalolactonketten in statistischer Verteilung gepfropft ist, sind in der EP-OS 0 243 271 beschrieben. Das Verfahren erfordert die Metallierung des Polyphenylenethers, gelöst in Tetrahydrofuran, mit metallorganischen Verbindungen wie n-Butyllithium unter peinlichem Ausschluß von Luftsauerstoff, Feuchtigkeit sowie Lösemittelresten, die leicht abstrahierbaren Wasserstoff enthalten, wie z. B. Alkoholen.

Die aus dem Stand der Technik bekannten Polyphenylenether-Polykondensat-Block- bzw. Propfcopolymere sind also nur durch eine aufwendige Synthese erhältlich, die drei getrennte Schritte beinhaltet:

1. Herstellung eines üblichen, unfunktionalisierten Polyphenylenethers;
2. Funktionalisierung;
3. Polykondensation geeigneter Monomerer in Gegenwart dieses funktionalisierten Polyphenylenethers.

Alternativ kann folgender, ebenfalls mindestens dreistufiger Weg beschritten werden:

1. Herstellung eines üblichen, unfunktionalisierten Polyphenylenethers;

1*. ggf. dessen Funktionalisierung;

2. Herstellung eines Polyesters;

2*. ggf. dessen Funktionalisierung;

3. Kopplung von Polyphenylenether und Polyester durch Reaktion in Lösung oder in der Schmelze.

Im Normalfall bildet sich ein Gemisch, das große Anteile der entsprechenden Homopolymerisate enthält. Zudem ist die Synthese häufig auf ein bestimmtes Polykondensat beschränkt.

Aufgabe der vorliegenden Erfindung war die Synthese von Polyphenylenether-Polykondensat-Blockcopolymeren unter Vermeidung der oben erwähnten Nachteile.

Es wurde nun ein einfacheres Verfahren zur Herstellung derartiger Blockcopolymerer gefunden. Dieses beinhaltet nur zwei Reaktionsschritte; typisch für dieses Verfahren ist, daß ein Produkt erhal ten wird, bei dem nahezu der gesamte Polyphenylenetheranteil an das Polykondensat gebunden ist. Diese Blockcopolymere unterscheiden sich zudem in ihrer Struktur von den aus der Literatur bekannten (siehe unten). Das Verfahren besteht aus folgenden Schritten:

1. man stellt zunächst ein Polykondensat her, das phenolische Endgruppen mit der Fähigkeit zur oxidativen Kupplung besitzt;

2. dieses Polykondensat wird als Comonomeres bei der oxidativen Kupplung substituierter Phenole eingesetzt.

Geeignete Polykondensate zur Darstellung der Blockcopolymeren enthalten folgende allgemeine Struktureinheiten:

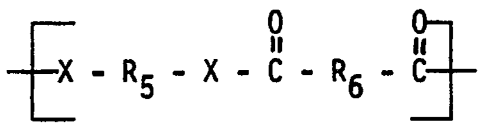

und/oder

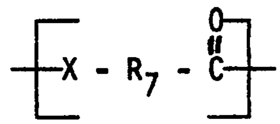

mit folgenden Bedeutungen:

X = O oder NH;

$R_5$ = zweiwertiger aliphatischer oder aromatischer Rest mit 2 bis 22 C-Atomen oder eine Struktur der allgemeinen Formel

$\{R_8\text{-}O\}$ $R_8$- ,

wobei $R_8$ ein zweiwertiger aliphatischer Rest mit 2 bis 4 C-Atomen ist und n einen Wert zwischen 1 und 60 hat;

$R_6$ = zweiwertiger aliphatischer oder aromatischer Rest mit 4 bis 38 C-Atomen;

$R_7$ = zweiwertiger aliphatischer oder aromatischer Rest mit 1 bis 20 C-Atomen.

Als erfinderisches Kennzeichen besitzen die Polykondensate Endgruppen der allgemeinen Formel

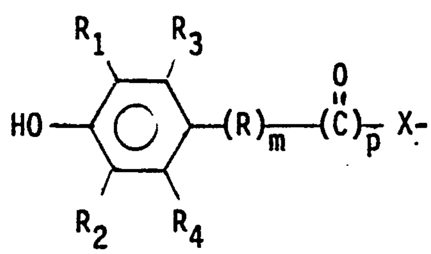

wobei die Substituenten und Parameter folgende Bedeutung haben:

$R_1$, $R_2$ = gegebenenfalls subst. $C_{7-12}$-Benzyl, H oder bevorzugt $C_{1-6}$-Alkyl mit der Einschränkung, daß $R_1$ und $R_2$ nicht gleichzeitig tertiäre Alkylgruppen oder H sein dürfen;

$R_3$, $R_4$ = $C_{1-6}$-Alkyl oder bevorzugt H;

R = zweiwertiger (cyclo)aliphatischer, arylischer oder benzylischer Rest mit bis zu 20 C-Atomen;

m, p = 0 oder 1 und $m + p \geq 1$;

X = O oder NH.

Besonders bevorzugt sind hierbei $R_1$, $R_2$ = $CH_3$ und $R_3$, $R_4$ = H.

Derartige Polykondensate werden aus den üblichen polykondensatbildenden difunktionellen Monomeren sowie funktionalisierten Phenolen wie z. B. phenolischen Carbonsäuren und deren Derivaten, phenolischen Alkoholen oder phenolischen Aminen erhalten, wobei in der Regel von einem Gemisch der difunktionellen Monomeren mit den funktionalisierten Phenolen ausgegangen wird. Es liegt jedoch im Rahmen der vorliegenden Erfindung, zunächst ein konventionelles Polykondensat herzustellen und dieses dann erst mit dem funktionalisierten Phenol umzusetzen. Als Carbonsäurederivate kommen hier vor allem Alkyl- oder Phenylester, Oxazoline oder Ethanolamide in Frage.

Diese funktionalisierten Phenole lassen sich z. B. nach folgenden Methoden herstellen:

1. Carboxylierung des Natrium- oder Kaliumsalzes eines o,o′-Dialkylphenols (W. H. Meck et al., Journal of Chemical and Engineering Data 14, 388 - 391 (1969); die entstandene Carbonsäure kann durch Standardreaktionen in Ester, Amide oder Oxazoline übergeführt werden.

2. Behandlung eines o,o′-Dialkylphenol-Alkylcarbonsäureesters wie z. B. 2,6-Dimethylphenylacetat mit Aluminiumtrichlorid (H. Henecka in "Methoden der organischen Chemie", (Houben-Weyl), Band 7/2a, S. 379 ff., Thieme-Verlag, Stuttgart 1973). Das entstehende p-Acyl-o,o′-dialkylphenol kann mit Schwefel und einem Amin nach Willgeroth-Kindler über eine Carbonsäure in die entsprechenden Ester, Amide usw. überführt werden.

3. Umsetzung eines Phenols unter saurer oder alkalischer Katalyse mit einer Substanz, die sowohl eine C-C-Doppelbindung bzw. eine unter Carboniumionbildung leicht abspaltbare Gruppe als auch eine funktionelle Gruppe wie COOH, Ester, Amid, Nitril oder ähnliche besitzt. Hier kommen vor allem in Frage:

a) Acrylsäuren bzw. ihre Derivate, z. B. Zimtsäure, Zimtsäuremethylester, Isopropylidencyanacrylsäureethylester, Benzylidenmalonsäurediethylester, Acrylnitril.

b) Diels-Alder-Addukte aus ggf. substituierten Butadienen und Alkylencarbonsäure(derivaten). Derartige funktionalisierte Phenole werden z. B. in EP-OS 0 106 799 beschrieben. Geeignete Diels-Alder-Addukte sind z. B. diejenigen aus Butadien und Acrylsäureethylester, Cyclopentadien und Acrylsäure sowie Isopren und Acrylnitril.

c) Hydroxycarbonsäuren wie z. B. Mandelsäure.

4. Die eingesetzten Phenolamine und Phenolalkohole können auf bekannte Weise folgendermaßen hergestellt werden:

a) Die Reduktion der entsprechenden Carbonsäureester, vorzugsweise auf katalytischem Wege, ergibt die Phenolalkohole.

b) Analog werden durch Reduktion der entsprechenden Amine, Nitrile oder Nitroverbindungen (z. B. aus Aldehyd und Nitromethan) die Phenolamine synthetisiert.

Bei der vorliegenden Erfindung ist im Rahmen der angegebenen Formel die Art des funktionalisierten Phenols und dessen Herstellung unkritisch. Wesentlich ist nur, daß die funktionelle Gruppe unter Polykondensationsbedingungen und die phenolische Gruppe unter den Bedingungen der oxidativen Kupplung reagieren können.

Besonders bevorzugt werden folgende funktionalisierten Phenole eingesetzt:

- 4-Hydroxy-3,5-dimethylbenzoesäure oder deren Derivate (nach Methode 1 aus 2,6-Dimethylphenol und Kohlendioxid)
- (4-Hydroxy-3,5-dimethylphenyl)essigsäure oder deren Derivate (nach Methode 2)
- 3-(4-Hydroxy-3,5-dimethylphenyl)propionsäure oder deren Derivate (nach Methode 3a)
- (4-Hydroxy-3,5-dimethylphenyl)phenylessigsäure oder deren Derivate (nach Methode 3c)
- 3-(4-Hydroxy-3,5-dimethylphenyl)-3-phenylpropionsäure oder deren Derivate (nach Methode 3a aus 2,6-Dimethylphenol und Zimtsäure)
- 2,6-Dimethyl-4-(2-hydroxyethyl)phenol (nach Methode 4a durch Reduktion von 4-Hydroxy-3,5-dimethylphenylessigsäureestern)
- 2,6-Dimethyl-4-(2-aminoethyl)phenol (nach Methode 4b durch Reduktion von z. B. 4-Hydroxy-3,5-dimethylphenylacetonitril)

Typische Beispiele geeigneter Polykondensate sind Polyamide, Polyamidimide, Polyester, Polyesteramide, Polyetheresteramide, Polyetheramide und Polyetherester.

Zur Herstellung dieser Polykondensate werden - neben den funktionalisierten Phenolen - folgende Monomere verwendet:

- aliphatische oder aromatische Dicarbonsäuren mit 6 - 40 C-Atomen oder deren Derivate wie z. B. Adipinsäure, Trimethyladipinsäure, Korksäure, Azelainsäure, Sebacinsäure, Dodecandisäure, Dimerfettsäure (vorzugsweise hydriert), Isophthalsäure und Terephthalsäure sowie deren Ester.
- aliphatische oder aromatische Tricarbonsäuren mit 6 bis 12 C-Atomen oder deren Anhydride bzw. Ester. Diese Tricarbonsäuren müssen zur Bildung cyclischer Imide befähigt sein, d. h. zwei Carboxylgruppen müssen ortho- bzw. alpha,beta- oder alpha-gamma-ständig sein. Geeignete Beispiele hierfür sind Succinylessigsäure und Trimellitsäureanhydrid.
- aliphatische oder aromatische Diamine mit 2 - 22 C-Atomen wie z. B. Ethylendiamin, Hexamethylendiamin, Trimethylhexamethylendiamin, Isophorondiamin, Dodecamethylendiamin, Bis-(p-aminocyclohexyl)methan, m-Xylylendiamin und 2,4-Diaminotoluol.
- aliphatische oder aliphatisch/aromatische Aminoalkohole mit 2 -22 C-Atomen wie z. B. Ethanolamin, 1-Amino-2-propanol oder 2-Amino-1-phenylethanol.
- aliphatische Diole mit 2 - 22 C-Atomen wie z. B. Ethylenglykol, 1,4-Butandiol, Neopentylglykol, 1,4-Cyclohexandimethanol, 1,6-Hexandiol, 1,10-Decandiol und 1,12-Dodecandiol.

- Polyetherdiole bzw. Polyetherdiamine der Formel

$HX\{ R_8 - O \}$ $R_8 - XH$

mit X = O oder NH, wobei $R_8$ ein zweiwertiger aliphatischer Rest mit 2 bis 4 C-Atomen ist und n einen Wert zwischen 1 und 60 hat. Beispiele sind Polyethylenglykol, Polypropylenglykol, Polytetrahydrofurandiol (PTHF) und Polytetrahydrofurandiamin. Bevorzugt wird Polytetrahydrofurandiol mit einem Molekulargewicht $M_n$ zwischen 500 und 4 000 eingesetzt.

- Lactame und Aminocarbonsäuren mit 2 bis 21 C-Atomen wie z. B. Glycin, Caprolactam, Omega-Aminocapronsäure, Omega-Aminoundecansäure, Omega-Aminododecansäure, Laurinlactam oder 3-Aminobenzoesäure.

- Lactone und Hydroxycarbonsäuren mit 2 bis 21 C-Atomen wie z. B. Glycolsäure, Milchsäure, 4-Hydroxybuttersäure, Pivalolacton oder Caprolacton.

Die Herstellung von Polyamiden ist z. B. in Kirk-Othmer, Encyclopedia of chemical technology, Vol. 18, John Wiley & Sons 1982, S. 328 - 371 beschrieben, die Herstellung von Polyestern ibid., S. 549 - 574. Geeignete Polyamidimide werden z. B. nach den für Polyamide üblichen Verfahren hergestellt. Polyesteramide werden nach den für Polyamide oder Polyester üblichen Verfahren erhalten. Zur Herstellung von Polyetheresteramiden und Polyetheramiden siehe z. B. Elias/Vohwinkel, "Neue polymere Werkstoffe für die industrielle Anwendung", 2. Folge, Hanser, München 1983, S. 125 - 134 sowie die dort zitierte Literatur; zu Polyetherestern siehe ibid., S. 121 -124.

Die phenolische Endgruppen enthaltenden Polykondensate besitzen ein Molekulargewicht im Bereich von $M_n$ = 1 000 - 50 000, bevorzugt 1 500 - 15 000. Gegebenenfalls kann ein konventioneller Regler wie Stearylamin, Benzoesäure oder ein Überschuß eines difunktionellen Monomeren mit eingesetzt werden.

Diese phenolische Endgruppen enthaltenden Polykondensate werden nun im Schritt 2 zusammen mit substituierten Phenolen der Struktur

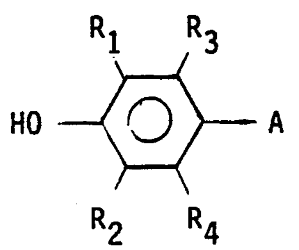 ,

mit A = Cl, Br, J oder bevorzugt H,

einer oxidativen Kupplungsreaktion unterworfen. Die einzige Voraussetzung für die Verwendung derartiger Polykondensate zur Darstellung der erfindungsgemäßen Blockcopolymerisate ist deren zumindest teilweise Löslichkeit in dem Lösemittelsystem der oxidativen Kupplung. Der Fachmann ist in der Lage, durch einfache Routineversuche bei einem vorgegebenen Polykondensat ein geeignetes Lösemittel zu finden. Selbstverständlich können die Substituenten $R_1$ bis $R_4$ in den phenolischen Endgruppen der Polykondensate und den substituierten Phenolen unabhängig voneinander gewählt werden.

Geeignete substituierte Phenole der obigen Struktur sind z. B. 2,3,6-Trimethylphenol, 2,6-Dibenzylphenol, 4-Brom-2,6-Dimethylphenol oder bevorzugt 2,6-Dimethylphenol. Es können auch Gemische solcher Phenole eingesetzt werden.

Die oxidative Kupplungsreaktion wird dem Stand der Technik entsprechend in aromatischen Lösemitteln wie z. B. Chlorbenzol, 1,2-Dichlorbenzol, Xylol, Toluol, Benzol, Ethylbenzol, Pyridin oder in Mischungen dieser Lösemittel mit Alkoholen wie z. B. Methanol oder Isopropanol bzw. Ketonen wie z. B. Aceton bzw. Kohlenwasserstoffen wie z. B. Hexan oder Heptan durchgeführt. Sie erfolgt in Gegenwart eines Metallkatalysators und einer Base wie z. B. eines sekundären und/oder tertiären Amins unter Hindurchleiten eines Sauerstoff enthaltenden Gases. Üblicherweise werden Kupfer-Amin- sowie Mangan-Komplexe als Katalysatoren verwendet (siehe US-PSS 3 306 874, 3 306 875; EP-OSS 0 098 929, 0 099 965, 0 122 394, 0 137 139 sowie DE-OSS 34 42 141 und 25 05 328). Die Wahl des Katalysatorsystems ist unkritisch.

Bei der oxidativen Kupplung wird im allgemeinen das Katalysatorsystem mit dem Lösemittel zusammen vorgelegt. Die Reihenfolge der anschließenden Zugabe von Polykondensat und substituiertem Phenol spielt keine Rolle. Man kann das Polykondensat und das substituierte Phenol als Gemisch zusammen zugeben; mit dem gleichen Erfolg kann auch zuerst das substituierte Phenol und dann, ggf. nach einer Vorreaktion, das Polykondensat zugegeben werden. Nach Erreichen des gewünschten Molekulargewichts wird die Reaktion mit den in der Literatur beschriebenen Methoden abgebrochen und das Polymere auf die übliche

Weise isoliert.

Das Verhältnis von eingesetztem Polykondensat und substituiertem Phenol wird so gewählt, daß der Polyphenylenetheranteil im Produkt 20 - 99 Gew.-% und der Polykondensatanteil 80 - 1 Gew.-% beträgt. Bevorzugt wird ein Gehalt von 25 - 95 Gew.-% Polyphenylenether und 75 - 5 Gew.-% Polykondensat.

Das Verhältnis von phenolischen Endgruppen zur Gesamtheit der Kettenenden beim Polykondensat beeinflußt unmittelbar die Struktur der daraus hergestellten Blockcopolymere. Ist das Verhältnis 1, so werden bei der oxidativen Kupplung ABA-Triblockcopolymere erhalten, wobei A einen Polyphenylenether- und B einen Polykondensatblock bedeutet. Ist das Verhältnis 0,5, so wird als Hauptkomponente ein AB-Diblockcopolymeres neben geringeren Anteilen Triblock und nicht eingebautem Polykondensat (ohne phenolische Endgruppen) erhalten; letzteres kann bei der Aufarbeitung abgetrennt werden; z. B. verbleibt es unter geeigneten Fällbedingungen in der Mutterlauge. Bei genügend langer Reaktionszeit, erkenntlich an der Beendigung der Sauerstoffaufnahme und dem vollständigen Abklingen der Wärmetönung, liegt wegen der bei der oxidativen Kupplung eintretenden Umverteilungsreaktion nahezu kein Polyphenylenether-Homopolymeres im Produkt vor.

Die erfindungsgemäßen Polyphenylenether-Polykondensat-Blockcopolymere unterscheiden sich vom Stand der Technik also durch

- nahezu vollständige Verknüpfung des Polyphenylenethers;
- ein neuartiges Verknüpfungsprinzip (Anbindung nicht am Kopf, sondern am Schwanz der Polyphenylenetherkette);
- Terminierung der Polyphenylenetherblöcke durch phenolische Endgruppen.

Die erfindungsgemäßen Blockcopolymere können unmittelbar oder als Zusatz für Formmassen zur Herstellung z. B. von Kunststofformkörpern oder Folien verwendet werden.

Die Bestimmung der Viskositätszahl J der erfindungsgemäßen Blockcopolymere erfolgt nach DIN 53 728 in Chloroform in $cm^3/g$ (Konzentration: 5 g/l).

Die transmissionselektronenmikroskopischen (TEM-)Aufnahmen wurden an Ultramikrotomdünnschnitten von Preßplatten an einem Transmissionselektronenmikroskop Philips EM 420 ST durchgeführt (Kontrastmittel $HCHO/OsO_4$).

Die DSC-Untersuchungen wurden an einem Mettler TA 3000 bei einer Aufheizrate von 10 K/min durchgeführt.

Die Erfindung wird durch folgende Beispiele verdeutlicht:

## Beispiel 1.1

50,0 g (4-Hydroxy-3,5-dimethylphenyl)essigsäure, 313,5 g Empol® 1010 (Dimerfettsäure der Firma USI Chemical BV, Breda, NL; M = 565 g/mol) sowie 80,6 g Hexamethylendiamin und 1,2 g 85 %ige Phosphorsäure werden unter Stickstoff auf 170 °C erhitzt. Innerhalb von 3 Stunden wird die Reaktionstemperatur bis auf 240 °C angehoben, dabei setzt die Polykondensation ein und die Hauptmenge Reaktionswasser destilliert ab. Nach 1 Stunde wird die Temperatur auf 260 °C erhöht und gleichzeitig Ölpumpenvakuum angelegt. Nach einer Gesamtreaktionszeit von 7 bis 8 Stunden ist die Polykondensation beendet; das Polyamid wird unter Stickstoff abgekühlt.

Aufgrund der Stöchiometrie der Edukte liegt ein Polyamid vor, das pro Molekül zwei phenolische Endgruppen enthält.

## Beispiel 1.2

249 g Isophorondiamin (1,46 Mol), 171 g Adipinsäure (1,17 Mol), 150 g (4-Hydroxy-3,5-dimethylphenyl)-phenylessigsäure (0,59 Mol) sowie 2 g 85 %ige Phosphorsäure als Katalysator werden analog Beispiel 1.1. umgesetzt.

Aufgrund der Stöchiometrie der Edukte liegt ein Polyamid vor, das pro Molekül zwei phenolische Endgruppen enthält.

## Beispiel 1.3

250 g Isophorondiamin (1,47 Mol), 337,7 g Dodecandisäure (1,47 Mol), 99 g Stearylamin (0,37 Mol), 94 g (4-Hydroxy-3,5-dimethylphenyl)phenylessigsäure (0,37 Mol) und 2 g 85 %ige Phosphorsäure werden

analog Beispiel 1.1 zu einem Polyamid umgesetzt.

Aufgrund der Stöchiometrie der Edukte liegt ein Polyamid vor, das im statistischen Mittel pro Molekül eine phenolische Endgruppe enthält.

Beispiel 1.4

Darstellung eines Polyesters aus 162,8 g 1,4-Cyclohexandimethanol (1,129 Mol), 312,0 g Dodecandisäure (1,355 Mol), 75,1 g 2,6-Dimethyl-4-(2-hydroxyethyl)phenol (0,452 Mol) und 1,1 g Titantetraisopropanolat (10 %ige Lösung in Isopropanol). Alle Ausgangssubstanzen werden unter Stickstoff ausgehend von 150 °C innerhalb von 3 Stunden auf 240 °C hochgeheizt. Die Polykondensation wird dann innerhalb von 4 Stunden im Ölpumpenvakuum bei 240 °C durchgeführt.

Der entstandene Polyester enthält pro Molekül zwei phenolische Endgruppen.

Beispiel 1.5

Herstellung eines Polyetheresters aus 846 g Polytetrahydrofuran 650 ($M_n$ = 639 g/Mol), 273,9 g Dodecandisäure, 55,1 g Methyl-3-(4-hydroxy-3,5-dimethylphenyl)-3-phenyl-propionat sowie 21,4 g 1,4-Butandiol und 2,9 g 10 %ige Titantetraisopropanolatlösung analog dem Verfahren in Beispiel 1.4.

Der entstandene Polyetherester enthält pro Molekül zwei phenolische Endgruppen.

Beispiel 1.6

100 g Polytetrahydrofuran 1000 ($M_n$ = 1014,5 g/Mol), 64,0 g Oligo amiddicarbonsäure (aus Laurinlactam und Dodecandisäure; $M_n$ = 806 g/Mol) und 10,2 g (3,5-Dimethyl-4-hydroxyphenyl)essigsäure sowie 1,4 g 1,4-Butandiol und 0,425 g Titantetraisopropanolatlösung (10 Gew.-% in Isopropanol) werden unter Stickstoff auf 150 °C erhitzt und dann innerhalb von 3 Stunden auf 240 °C hochgeheizt. Die Polykondensation wird dann innerhalb von 4 Stunden im Ölpumpenvakuum bei 240 °C durchgeführt.

Das entstandene Polyetheresteramid enthält pro Molekül zwei phenolische Endgruppen.

Beispiel 2.1

In einem 2 l-Rührreaktor, gefüllt mit 1100 g Toluol und 145 g Methanol, werden der Katalysator, hergestellt aus 0,44 g Mangan-II-chlorid-dihydrat und 1,75 g Benzoinoxim in 50 g Methanol, 10 g Morpholin sowie 5 g 50 %ige Natronlauge unter kräftigem Rühren vermischt. Anschließend wird die Reaktionsmischung mit einem Luftstrom von 200 l/h begast. Innerhalb kurzer Zeit werden zunächst 10 g einer 50 %igen Lösung von 2,6-Dimethylphenol in Toluol und anschließend innerhalb von 30 Minuten eine Mischung aus 20 g des unter Beispiel 1.1 hergestellten Polyamids in 90 g 50 %iger Lösung von 2,6-Dimethylphenol in Toluol zu dem Reaktionsgemisch hinzugefügt. Nach einer Gesamtpolykondensationszeit von 75 Minuten wird die Reaktion durch Zugabe von 300 g 50 %iger Essigsäure gestoppt. Nach der Phasentrennung wird das Polymere aus der toluolischen Phase durch Zugabe von Methanol gefällt.

Viskositätszahl J: 34 $cm^3$/g

Glasübergangstemperaturen Tg nach DSC (Aufheizrate 10 K/min):

ca. 20 °C (breit; vom Polyamidanteil)

183 °C (vom Polyphenylenether-Anteil)

Die TEM-Aufnahme (siehe Abbildung 1) zeigt das Vorliegen von zwei diskreten Phasen, deren äußerst geringe Abmessungen (ca. 2 nm) im molekularen Bereich liegen. Es liegt eine Netzwerkstruktur vor, wie sie z. B. auch von SBS-Triblockcopolymeren bekannt ist.

Das GPC des Produktes zeigt die für ein reines Triblockcopolymeres erwartete monomodale Verteilung.

Beispiel 2.2

Zu einer Mischung aus 1300 g Toluol und 318 g Methanol werden sukzessiv 30 g Di-n-butylamin, 1,01 g N,N′-Di-tert.-butylethylendiamin sowie 1,33 g Kupfer-II-bromid hinzugefügt. Anschließend wird durch ein

Tauchrohr ein Luftstrom von 200 l/h in den Reaktor eingeleitet und innerhalb von 20 Minuten eine Mischung aus 170 g einer 50 %igen Lösung von 2,6-Dimethylphenol in Toluol und 15 g des unter 1.2 hergestellten Polyamids hinzugefügt. Nach einer Gesamtreaktionszeit von 90 Minuten wird die Polykondensation durch Zugabe von ca. 425 g einer 0,5 %igen Lösung von Triethanolamin in Wasser gestoppt. Die Aufarbeitung entspricht der im Beispiel 2.1.
Viskositätszahl J: 40 $cm^3/g$
Das GPC zeigt die für ein reines Triblockcopolymeres erwartete nomodale Verteilung.

Beispiel 2.3

Vorgelegt wird eine Mischung aus 1300 g Toluol, 197 g Methanol, 40 g Di-n-butylamin, 1,01 g N,N'-Ditert.-butylethylendiamin sowie 1,33 g Kupfer-II-bromid. Analog Beispiel 2.2 wird in die Reaktionsmischung Luft eingeleitet und anschließend eine Mischung aus 100 g einer 50 %igen Lösung von 2,6-Dimethylphenol/2,3,6-Trimethylphenol (90/10 Mol/Mol) in Toluol und 50 g des in Beispiel 1.3 hergestellten Polyamids hinzugefügt. Weitere Reaktionsführung analog Beispiel 2.2.
Viskositätszahl J: 46 $cm^3/g$
Das GPC zeigt eine bimodale Verteilung, die auf das Vorliegen von Diblockcopolymerem als Hauptprodukt neben Triblockcopolymerem hinweist.

Beispiel 2.4

Analog zu dem in Beispiel 2.3 beschriebenen Verfahren wird ein Gemisch aus 20 g des unter 1.4 hergestellten Polyesters und 80 g 2,6-Dimethylphenol polykondensiert.
Viskositätszahl J: 33 $cm^3/g$.
Das GPC zeigt eine monomodale Verteilung, die auf das fast ausschließliche Vorliegen von Triblockcopolymerem hinweist.

Beispiel 2.5

Analog zu dem in Beispiel 2.3 beschriebenen Verfahren wird ein Gemisch aus 20 g des unter 1.5 hergestellten Polyetheresters und 80 g 2,6-Dimethylphenol polykondensiert.
Viskositätszahl J: 62 $cm^3/g$
Das GPC zeigt eine monomodale Verteilung, die auf das fast ausschließliche Vorliegen von Triblockcopolymerem hinweist.
Die TEM-Aufnahme (siehe Abbildung 2) zeigt das Vorliegen von zwei diskreten Phasen mit äußerst geringen Abmessungen (ca. 25 nm für die Polyetheresterphase), wie es für ein Blockcopolymeres zu erwarten ist.

Beispiel 2.6

Analog zu dem in Beispiel 2.3 beschriebenen Verfahren wird ein Gemisch aus 20 g des unter 1.6 hergestellten Polyetheresteramids und 80 g 2,6-Dimethylphenol polykondensiert.
Viskositätszahl J: 64 $cm^3/g$
Elementaranalyse N: 0,32 % (Theorie: 0,39 %)
GPC ähnlich Beispiel 2.5.

100 nm

230 000 : 1

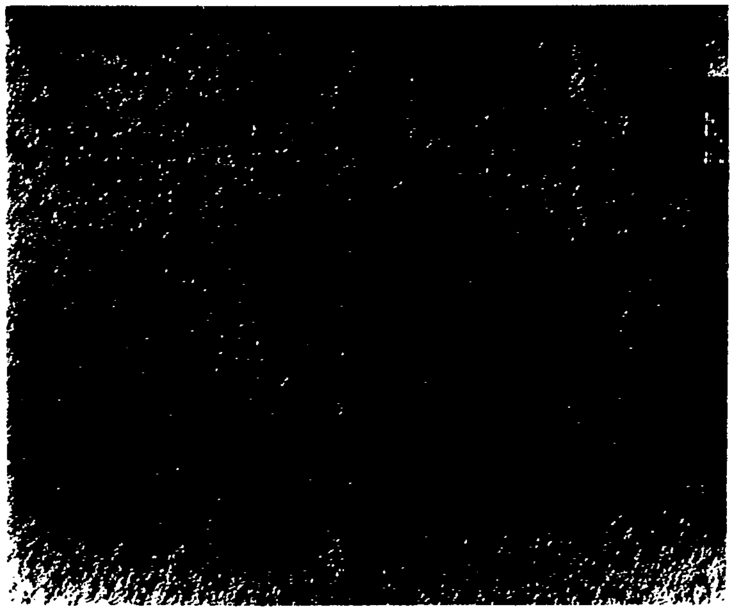

Abb. 1:

TEM-Aufnahme an einem Dünnschnitt des Produktes von Beispiel 2.1; 230 000-fache Vergrößerung. Der dunkle Anteil stellt die Polyamidphase dar.

100 nm

105 000 : 1

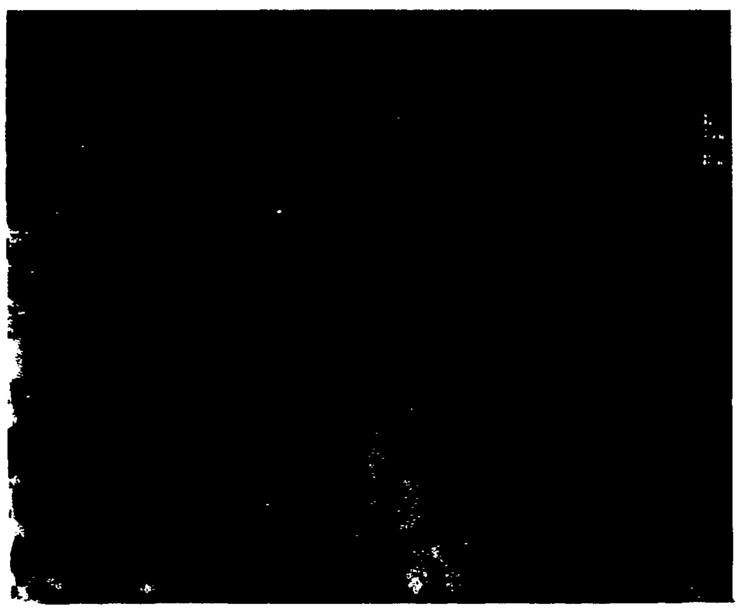

Abb. 2:

TEM-Aufnahme an einem Dünnschnitt des Produkts von Beispiel 2.5; 105 000-fache Vergrößerung. Der dunkle Anteil stellt die Polyetheresterphase dar.

**Ansprüche**

1. Verfahren zur Herstellung von Polyphenylenether-Polykondensat-Blockcopolymeren des Typs AB und/oder ABA (mit A = Polyphenylenether und B = Polykondensat), dadurch gekennzeichnet, daß man

I. ein Polykondensat herstellt, das Endgruppen der allgemeinen Formel

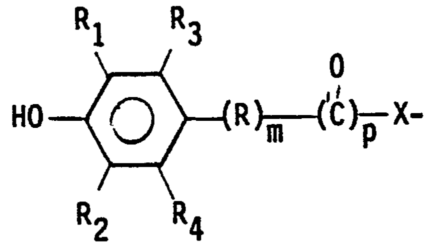

aufweist, wobei die Substituenten und Parameter folgende Bedeutung haben:
$R_1$, $R_2$ = gegebenenfalls subst. $C_{7-12}$Benzyl, H oder bevorzugt $C_{1-6}$-Alkyl mit der Einschränkung, daß $R_1$ und $R_2$ nicht gleichzeitig tertiäre Alkylgruppen oder H sein dürfen.
$R_3$, $R_4$ = $C_{1-6}$-Alkyl oder bevorzugt H;
R = zweiwertiger (cyclo)aliphatischer, arylischer oder benzylischer Rest mit bis zu 20 C-Atomen;
m, p = 0 oder 1 und $m + p \geq 1$
X = O oder NH; und

II. anschließend eine oxidative Kupplung von substituierten Phenolen der Formel

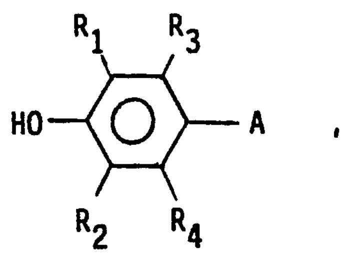

mit A = Cl, Br, J oder bevorzugt H
und dem Polykondensat gemäß I. in einem Lösemittel durchführt, in dem das Polykondensat zumindest teilweise löslich ist, wobei die Substituenten $R_1$ bis $R_4$ in den phenolischen Endgruppen der Polykondensate und den substituierten Phenolen unabhängig voneinander gewählt werden können.

2. Verfahren gemäß Anspruch 1, durch gekennzeichnet, daß das Polykondensat Einheiten der allgemeinen Formel

$$\left[ X - R_5 - X - \overset{O}{\overset{\parallel}{C}} - R_6 - \overset{O}{\overset{\parallel}{C}} \right] \quad \text{und/oder} \quad \left[ X - R_7 - \overset{O}{\overset{\parallel}{C}} \right]$$

mit folgenden Bedeutungen enthält:
X = O oder NH;
$R_5$ = zweiwertiger aliphatischer oder aromatischer Rest mit 2 bis 22 C-Atomen oder eine Struktur der allgemeinen Formel
$\{R_8\text{-}O\text{-}\}$ $R_8$-,
wobei $R_8$ ein zweiwertiger aliphatischer Rest mit 2 bis 4 C-Atomen ist und n einen Wert zwischen 1 und 60 hat;
$R_6$ = zweiwertiger aliphatischer oder aromatischer Rest mit 4 bis 38 C-Atomen;
$R_7$ = zweiwertiger aliphatischer oder aromatischer Rest mit 1 bis 20 C-Atomen.

3. Verfahren gemäß den Ansprüchen 1 und 2,

dadurch gekennzeichnet,
daß das Polykondensat ein Polyamid ist.

4. Verfahren gemäß den Ansprüchen 1 und 2,
dadurch gekennzeichnet,
daß das Polykondensat ein Polyester ist.

5. Verfahren gemäß den Ansprüchen 1 bis 4,
dadurch gekennzeichnet,
daß das Polykondensat ein Molekulargewicht $M_n$ von 1 000 bis 50 000, vorzugsweise von 1 500 bis 15 000 besitzt.

6. Verfahren gemäß den Ansprüchen 1 bis 5,
dadurch gekennzeichnet,
daß als substituiertes Phenol 2,6-Dimethylphenol eingesetzt wird.

7. Polyphenylenether-Polykondensat-Blockcopolymere, hergestellt nach einem Verfahren gemäß den Ansprüchen 1 bis 6.

8. Blockcopolymere gemäß Anspruch 7,
dadurch gekennzeichnet,
daß der Polyphenylenetheranteil 20 - 99 Gew.-% und der Polykondensatanteil 80 - 1 Gew.-%, bevorzugt 25 - 95 Gew.-% und 75 -5 Gew.-% beträgt.

9. Formmassen, die Blockcopolymere gemäß den Ansprüchen 7 und 8 enthalten.